# EUROPEAN PATENT APPLICATION

(11) **EP 4 675 733 A1**
(43) Date of publication of application: **07.01.2026**
(21) Application number: 25158980.0
(22) Date of filing: 20.02.2025
(51) Int. Cl.: H01M 10/04, H01M 50/204, H01M 50/244, H01M 50/264, H01M 50/267, H01M 50/291

(54) **BATTERY BOX, BATTERY PACK AND VEHICLE**

(30) Priority: 01.07.2024 CN 202421529844 U; 07.08.2024 WO PCT/CN2024/110375
(71) Applicant: Eve Energy Storage Co., Ltd, Wuhan, Hubei 430074 (CN)
(72) Inventor: XIONG, Fei, Wuhan, Hubei, 430074 (CN); HUANG, Wei, Wuhan, Hubei, 430074 (CN); ZHANG, Jin, Wuhan, Hubei, 430074 (CN)
(74) Representative: Berggren Oy

(57) **Abstract**

The present disclosure provides a battery box, a battery pack and a vehicle. The battery box includes a box body provided with a mounting cavity and a support assembly. The mounting cavity is configured for mounting a plurality of battery cells. The box body includes a side plate forming at least a part of the mounting cavity. The support assembly includes a support plate and an adjustment set configured for adjusting a spacing between the support plate and the side plate. Particularly, the support plate is configured to abut against one side of the plurality of battery cells, so that the plurality of battery cells can abut against the box body.

## Description

### TECHNICAL FIELD

The present disclosure relates to the field of battery technology, and in particular to a battery box and a battery pack.

### BACKGROUND

In related technologies, a CTP (Cell-To-Pack, directly integrated battery cells) battery pack typically includes a box body, a plurality of battery cells, and two fixed support parts located on both sides of the plurality of battery cells. The plurality of battery cells form multiple battery cell groups arranged in parallel rows.

### SUMMARY

The thicknesses of the battery cells may be different, leading to the situation where the length of the battery cell group exceeds the distance between the two fixed support parts. At this time, the battery cell group is typically compressed by using an auxiliary tool, so as to be placed between the two fixed support parts. Due to the complex operation of the auxiliary tool, the assembly efficiency of the battery cells is relatively low.

In order to achieve the aforementioned objectives, the present disclosure adopts the following technical solutions:

In a first aspect, the embodiments of the present disclosure provide a battery box. The battery box includes a box body, which is provided with a mounting cavity configured for mounting a plurality of battery cells, and the box body includes a side plate forming at least a part of the mounting cavity; a support assembly, including a support plate and an adjustment set configured for adjusting a spacing between the support plate and the side plate; in particular, the support plate is configured to abut against one side of the plurality of multiple battery cells, so that the plurality of battery cells can abut against the box body.

In a second aspect, the embodiments of the present disclosure provide a battery pack including the battery box described above.

In a third aspect, the embodiments of the present disclosure provide a vehicle including the battery pack described above.

### Beneficial Effects

For the battery box provided in the present disclosure, the support plate movably connected to the side plate can be conveniently adjusted to an appropriate position to abut against one side of the multiple battery cells, so that the multiple battery cells can abut against the box body. Thus, the assembly of the multiple battery cells is convenient, and the assembly efficiency of the multiple battery cells is improved.

The battery pack provided in the present disclosure has all the advantages of the aforementioned battery box.

The vehicle provided in the present disclosure has all the advantages of the aforementioned battery pack.

### BRIEF DESCRIPTION OF THE DRAWINGS

FIG. 1 is a structural diagram of a battery box in related technologies;
FIG. 2 is a structural diagram of a battery box provided in embodiments of the present disclosure;
FIG. 3 is a cross-sectional view of FIG. 2;
FIG. 4 is an enlarged view of part A in FIG. 3;
FIG. 5 is an exploded view of a support assembly in FIG. 4;
FIG. 6 is a structural diagram showing a support plate abutting against multiple battery cells;
FIG. 7 is a side view of FIG. 6.

### Explanation of reference numerals:

100A battery box; 110A box body; 120A battery cell; 130A fixed support part; 100 battery box; 110 side plate; 120 battery cell; 130 support assembly; 131 support plate; 140 mounting cavity; 150 adjustment set; 151 first connecting plate; 152 second connecting plate; 160 fixed plate; 161 first pivot part; 162 second pivot part; 170 insulating member; 171 protective part; 172 limiting part.

### DETAILED DESCRIPTION

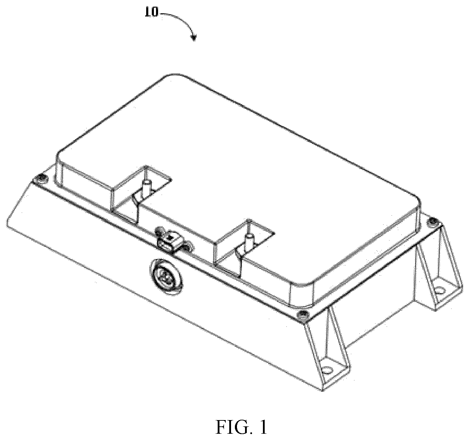

In related technologies, referring to FIG. 1, FIG. 1 is a structural diagram of a battery box 100A in related technologies. The battery box 100A typically includes a box body 110A, multiple battery cells 120A located in the box body 110A, and fixed support parts 130A located on both sides of the multiple battery cells 120A. The fixed support parts 130A are configured for fixing the multiple battery cells 120A. Because positions of the fixed support parts 130A are fixed, a distance between the two fixed support parts 130A is also fixed. However, because thicknesses of the battery cells 120A may be different, the multiple battery cells 120A arranged along a length direction of the box body 110A are considered as a battery cell group, there may be a situation where a length of the battery cell group exceeds the distance between the two fixed support parts 130A during assembling the battery cells 120A. At this time, it is difficult to place the battery cell group into the box body 110A. If the number of battery cells in one battery cell group is reduced by one or more, the battery cell group can be placed into the box body 110A. However, the length of the battery cell group is less than the distance between the two fixed support parts 130A, thus the fixed support parts 130A cannot effectively fix the battery cell group. Therefore, when assembling the battery cells 120A, an auxiliary tool is typically used to compress the multiple battery cell groups to make the length of each battery cell group equal to the distance between the two fixed support parts 130A, so as to place the battery cell groups between the two fixed support parts 130A. However, the use of the auxiliary tool results in a lower assembly efficiency of the battery cells 120A.

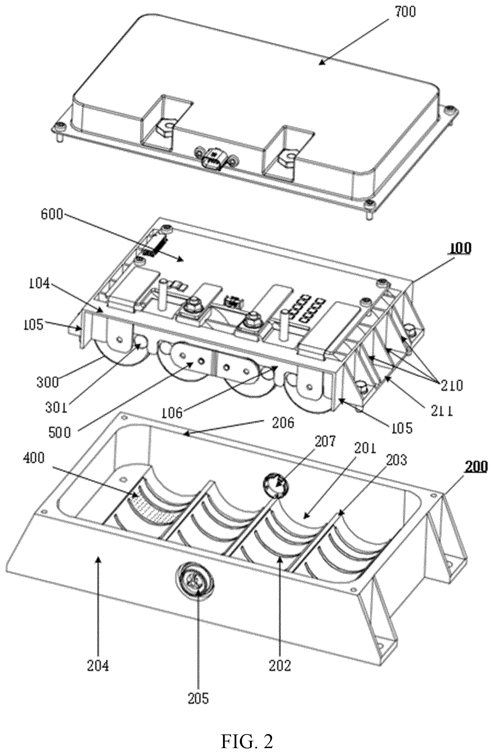

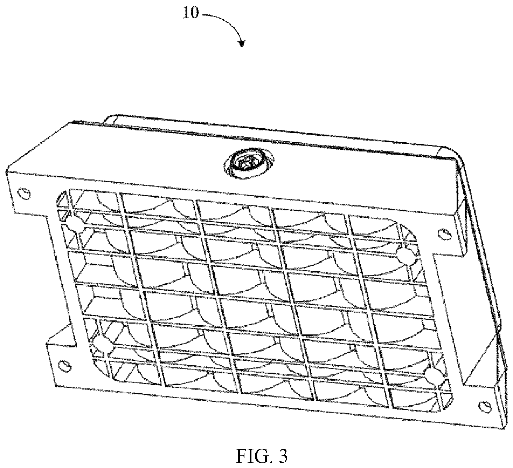

In order to solve a problem of low assembly efficiency of the battery cells mentioned above, the embodiments of the present disclosure provide a battery box 100. Referring to FIG. 2 and FIG. 3, FIG. 2 is a structural diagram of a battery box provided in the embodiments of the present disclosure, and FIG. 3 is a cross-sectional view of FIG. 2. The battery box 100 includes a box body provided with a mounting cavity 140 and a support assembly 130. The box body includes a side plate 110 forming at least a part of the mounting cavity 140, and the mounting cavity 140 is configured for mounting the multiple battery cells 120. The support assembly 130 includes a support plate 131 and an adjustment set 150 configured for adjusting a spacing between the support plate 131 and the side plate, and the support plate 131 is configured to abut against one side of the multiple battery cells 120, so that the multiple battery cells 120 can abut against the box body. In particular, the support plate 131 can be a stretchable elastic member.

Compared to the related technologies, for the battery box 100 provided in the embodiments, in a process of assembling the battery cells 120, there is no need to use the auxiliary tool to compress the multiple battery cells 120 of each battery cell group before placing them into the box body. Instead, after all the battery cells 120 are placed into the box body, they abut against the support plate 131 of the support assembly 130 and are fixed in the box body. It is convenient to adjust the support plate 131 movably connected to the side plate 110 to a suitable position to abut against one side of the multiple battery cells 120, so that the multiple battery cells 120 can abut against the box body, thereby facilitating the assembly of the multiple battery cells 120. Meanwhile, the support assembly 130 occupies a smaller space in the battery box 100, thus an operational space in the process of assembling the battery cells 120 is larger. Therefore, it is more convenient and flexible when the assembling the battery cells 120, and the assembly efficiency of the battery cells 120 is improved.

In some embodiments, referring to FIG. 3, the support assembly 130 includes an adjustment set 150, and the support plate 131 is rotatably connected to the side plate 110 through the adjustment set 150. In particular, before all the battery cells 120 are fully assembled into the mounting cavity 140, a distance between the support plate 131 connected to the adjustment set 150 and the multiple battery cells 120 is greater. At this time, a space in the mounting cavity 140 for assembling the battery cells 120 is larger, which facilitates an assembly operation. After all the battery cells 120 are assembled into the mounting cavity 140, the adjustment set 150 rotates to drive the support plate 131 to gradually move closer to the multiple battery cells 120, and eventually abut against and compress the multiple battery cells 120, thereby providing a fixing effect for the multiple battery cells 120.

In some embodiments, the adjustment set 150 can be a stretchable member that can deform under an external force and return to or close to its initial state when the external force is removed. The elastic member is arranged between the side plate and the support plate, and can adapt to the battery cell groups with different lengths, composed of multiple battery cells, through elastic deformation due to compression. The adjustment set 150 can also be a stretchable member arranged between the side plate and the support plate that can stretch or retract, or other adjustable member that can stretch or retract to meet different length or size requirements.

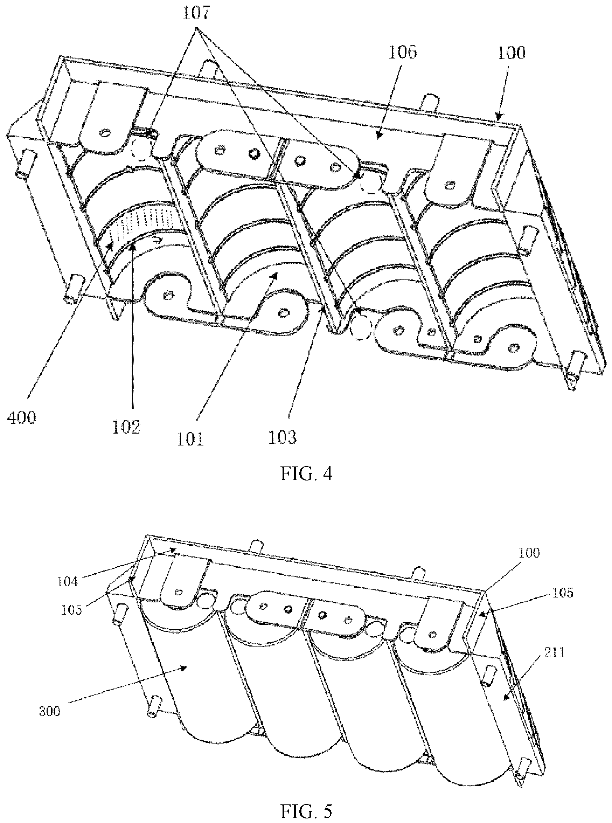

In some embodiments, referring to FIG. 3 and FIG. 4, FIG. 4 is an enlarged view of part A in FIG. 3. The adjustment set 150 includes a first connecting plate 151 and a second connecting plate 152. In particular, the second connecting plate 152 is located at an upper end of the first connecting plate 151 and is arranged oppositely to the first connecting plate 151. One side of the first connection plate 151 and one side of the second connection plate 152 are rotatably connected to the side plate 110, and the other side of the first connection plate 151 and the other side of the second connection plate 152 are rotatably connected to the support plate 131.

Specifically, the first connecting plate 151 and the second connecting plate 152 are arranged oppositely to each other, and their two sides are rotatably connected to the side plate 110 and the support plate 131 respectively. When the first connecting plate 151 rotates relative to the side plate 110, the second connecting plate 152 will also rotate relative to the side plate 110, and after rotation, a large plane of the first connecting plate 151 and a large plane of the second connecting plate 152 are parallel to each other. It is easy to be understood that, when the first connecting plate 151 and the second connecting plate 152 rotate relative to the side plate 110, the support plate 131 connected to their second side will also rotate accordingly. During rotation, the large plane of the support plate 131 is parallel to the side plate 110, and also parallel to side surfaces of the multiple battery cells 120 at the same time, so that a compressing force distribution of the support plate 131 on the multiple battery cells 120 is more uniform. The support plate 131 abuts against and compresses the multiple battery cells 120 to provide the fixing effect for the multiple battery cells 120.

In some embodiments, referring to FIG. 4, the support assembly 130 further includes a fixed plate 160 fixed to the side plate 110, and the specific fixing method is not limited. One side of the first connecting plate 151 and one side of the second connecting plate 152 are rotatably connected to the side plate 110 through the fixed plate 160. In this embodiment, by providing the fixed plate 160 on the side plate 110 of the box body, fixing points of the first connecting plate 151 and the second connecting plate 152 are transferred from the side plate 110 to the fixed plate 160, so that a design of the box body is simpler and a mounting of the fixed plate 160 is easier to achieve.

In some embodiments, referring to FIG. 4 and FIG. 5, FIG. 5 is an exploded view of a support assembly in FIG. 4. One side of the fixed plate 160 is provided with multiple first pivot parts 161, and one side of the first connecting plate 151 is rotatably connected to the multiple first pivot parts 161. The other side of the fixed plate 160 is provided with multiple second pivot parts 162, and the other side of the second connecting plate 152 is rotatably connected to the multiple second pivot parts 162. In particular, each of the first pivot parts 161 is staggered with the corresponding second pivot part 162 in a height direction of the battery box 100.

In this embodiment, because each first pivot part 161, located on both sides of the fixed plate 160 in the height direction of the battery pack, is staggered with the corresponding second pivot part 162 in the height direction of the battery pack, when one side of the first connecting plate 151 and one side of the second connecting plate 152 are rotatably connected to the first pivot parts 161 and the second pivot parts 162 respectively, the connection parts of both are also staggered with each other in the height direction of the battery pack. Through this staggered structure, the force distribution when the first connecting plate 151 and the second connecting plate 152 are connected to the fixed plate 160 is more uniform, so that the fixed plate 160 is less likely to be damaged due to concentrated force. Meanwhile, this staggered structure ensures that the fixed plate 160, the first connecting plate 151, and the second connecting plate 152 are not easily displaced in a width direction of the battery, which helps to maintain a stability of the support assembly 130.

Particularly, a rotating rod passes through multiple holes located on one side of the first connecting plate 151 and multiple holes surrounded by multiple second pivot parts 162, so that the first connecting plate 151 can rotate relative to the fixed plate 160 around the rotating rod. And, another rotating rod passes through multiple holes located on one side of the second connecting plate 152 and multiple holes surrounded by multiple first pivot parts 161, so that the second connecting plate 152 can rotate relative to the fixed plate 160 around the rotating rod. Alternatively, a rotating rod passes through multiple holes located on the other side of the first connecting plate 151 and multiple holes at a lower end of the support plate 131, so that the first connecting plate 151 can rotate around the rotating rod relative to the support plate 131. And, a rotating rod passes through multiple holes located on the other side of the second connecting plate 152 and multiple holes located at an upper end of the support plate 131, so that the second connecting plate 152 can rotate around the rod relative to the support plate 131. Finally, the fixed plate 160, the first connecting plate 151, the second connecting plate 152, and the support plate 131 cooperate with each other to achieve a rotation of the support plate 131 relative to the fixed plate 160.

Additionally, since the first connecting plate 151 and the second connecting plate 152 are rotatably connected to the fixed plate 160 and the support plate 131, before placing the battery cells 120 into the battery box 100, the support plate 131 needs to be lifted upward relative to the fixed plate 160 to increase an accommodation space of the battery box 100, and then the battery cells 120 can be placed into the battery box 100.

In some embodiments, referring to FIG. 3, an angle between the large plane of the first connecting plate 151 and a large plane of the fixed plate 160, as well as an angle between the large plane of the second connecting plate 152 and the large plane of the fixed plate 160, are both 90°. In this state, even if the battery box 100 shakes in the length direction of the multiple battery cells 120, the compressing force exerted by the support plate 131 on the multiple battery cells 120 is also in the length direction of the multiple battery cells 120, so that a supporting force provided by the first connecting plate 151 and the second connecting plate 152 for the support plate 131 can offset the aforementioned compressing force. Therefore, a structure of the support assembly 130 is stable and not easily deformed, which prevents the multiple battery cells 120 from being displaced.

In some embodiments, referring to FIG. 3 and FIG. 4, the battery box 100 further includes an insulating member 170. The insulating member 170 includes a protective part 171 and a limiting part connected to the protective part 171 in a bent manner. The box body further includes a bottom plate forming at least a part of the mounting cavity 140. In particular, the protective part 171 is fixed to one side of the multiple battery cells 120, and the support plate 131 abuts against a side of the protective part 171 away from the multiple battery cells 120. The first connecting plate 151 abuts against the limiting part 172, so that the limiting part 172 is located between the first connecting plate 151 and the bottom plate.

Specifically, after the multiple battery cells 120 are assembled, the protective part 171 of the insulating member 170 is fixed to a side of the multiple battery cells 120 close to the support assembly 130. The protective part 171, located between one side of the multiple battery cells 120 and the support plate 131, is used to protect one side of the multiple battery cells 120 during a process of the supporting plate 131 compressing the multiple battery cells 120, preventing one side of the multiple battery cells 120 from being scratched by the supporting plate 131, thus ensuring a safety of the multiple battery cells 120. The limiting part 172, located between the first connecting plate 151 and the bottom plate, provides a support for the first connecting plate 151.

In some embodiments, the battery box 100 further includes a fixed member, which passes through the first connecting plate 151 and the limiting part 172 and is fixed to the bottom plate. Specifically, after the battery cells 120 are assembled, for the multiple rows of battery cell groups, which are opposite to the protective part 171 and composed of the multiple battery cells 120 and arranged side by side in the width direction of the battery cells 120, it is possible that some rows of battery cell groups may have a shorter length. This results in a situation where the compressing force exerted on the protective part 171 is relatively small although the support plate 131 abuts against the protective part 171. At this time, the first connecting plate 151 and the limiting part 172 are fixed to one side of the box body of the battery box 100 by the fixing member. Because the protective part 171 is connected to the limiting part 172 in a bent manner, when a position of the limiting part 172 is fixed, a position of the protective part 171 is also fixed. Thus, positions of the multiple battery cells 120 that abut against the protective part 171 are also fixed. Therefore, even when the compressing force exerted by the support plate 131 on the protective part 171 is relatively small, it can still prevent the battery cells 120 from shifting, ensuring a stability of the battery box 100.

Specifically, during a process of placing the battery cells 120 into the mounting cavity, the support assembly 130 is in a first state. At this time, the support assembly 130 does not yet abut against the battery cells 120. After all the battery cells 120 are placed, the protective part 171 of the insulating member 170 is fixed to the side of the multiple battery cells 120 close to the support assembly 130, and the limiting part 172 of the insulating member 170 abuts against the bottom plate of the battery box 100. At this time, the first connecting plate 151 rotates from an initial position towards the second connecting plate 152, so that the support plate 131 is rotatably connected to the first connecting plate 151 gradually moves closer to and eventually abuts against the protective part 171. At this time, the first connecting plate 151 continues to rotate, and the support plate 131 continues to move downward relative to the protective part 171 until the second connecting plate 152 abuts against the limiting part 172. At this time, the fixed member passes through the bottom plate of the battery box 100, the limiting part 172 and the first connecting plate 151, and the first connecting plate 151 and the limiting part 172 are fixed to the battery box 100. The support plate 131 compresses one side of the multiple battery cells 120, and cooperates with the fixed support part located on the other side of the multiple battery cells 120, so as to fix the multiple battery cells 120 in the mounting cavity 140. It is easy to be understood that, in some embodiments, the fixed support part located on the other side of the multiple battery cells 120 can also be replaced with the support assembly 130. That is, both sides of the multiple battery cells 120 are provided with the support assemblies 130, so as to fix the multiple battery cells 120.

In some embodiments, referring to FIG. 3, a height of the protective part 171 is H1, a height of the support plate 131 is H2, a height of the multiple battery cells 120 is H3, and H2 ≤ H1 ≤ H3.

Specifically, under a condition that the height of the protective part 171 is greater than or equal to a length of the fourth support member, when the support assembly 130 is in a second position, it can be ensured that the compressing force distribution of the support assembly 130 on the protective part 171 is relatively uniform. At the same time, the height of the protective part 171 is less than or equal to the height of the multiple battery cells 120, which can also reduce a material cost of the protective part 171.

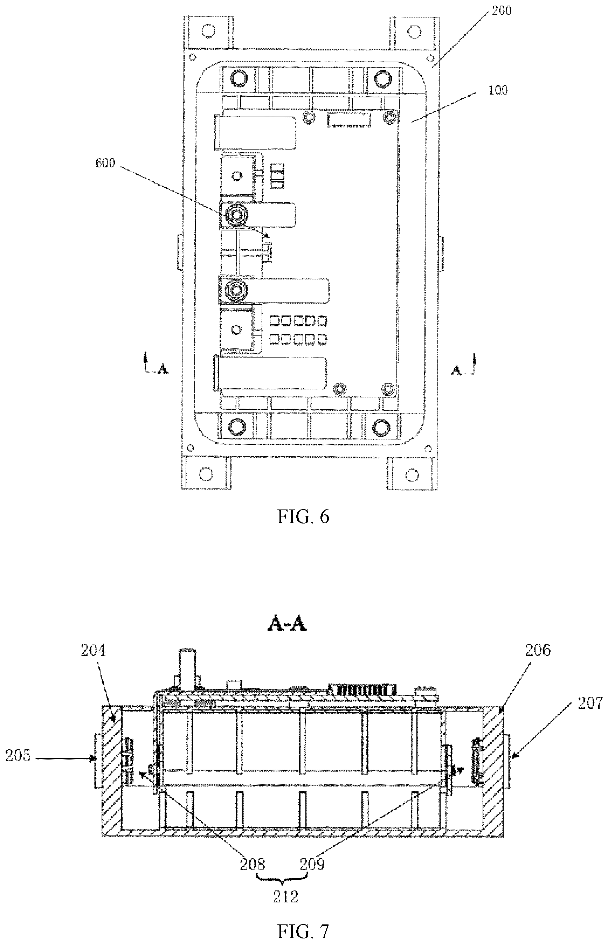

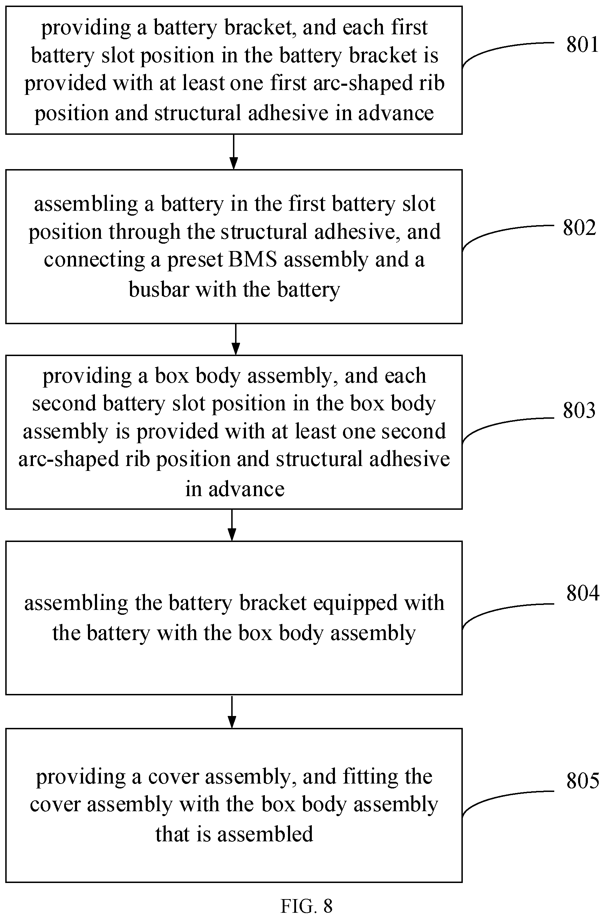

In some embodiments, referring to FIG. 6 and FIG. 7, FIG. 6 is a structural diagram showing a support plate 131 abutting against the multiple battery cells 120, and FIG. 7 is a side view of FIG. 6. A width of the support plate 131 is D1, a width of the multiple battery cells 120 is D2, and D2 - 20 mm ≤ D1 ≤ D2.

Specifically, the width of the support plate 131 D1 is limited to be greater than or equal to the width of the multiple battery cells 120 D2 - 20 mm, and less than or equal to the width of multiple battery cells 120 D2, so as to ensure that the support plate 131 can compress one side of the multiple battery cells 120 while saving a certain amount of material cost of the support plate 131. Additionally, when the width of the support plate 131 D1 is equal to the width of multiple battery cells 120 D2, the compressing force distribution of the support plate 131 on multiple battery cells 120 is most uniform.

The present disclosure provides the battery box 100 including the box body provided with the mounting cavity 140 and the support assembly 130. The mounting cavity 140 is configured for mounting the multiple battery cells 120, and the support assembly 130 includes the support plate 131. In particular, the box body includes the side plate 110 forming at least a part of the mounting cavity 140, and the support plate 131 rotates to abut against one side of the battery cells 120, so that the multiple battery cells 120 can abut against the box body.

Compared to the related technologies, where the battery cells 120 are first compressed by using the auxiliary tool before being placed into the mounting cavity 140, the battery box 100 provided in the present disclosure can conveniently adjust the support plate 131 movably connected to the side plate 110 to an appropriate position to abut against one side of the multiple battery cells 120, so that the multiple battery cells 120 can abut against the box body. Therefore, the assembly of the multiple battery cells 120 is convenient, thereby improving the assembly efficiency of the battery cells 120.

The embodiments of the present disclosure also provide a battery pack including a plurality of the battery boxs 100 described above. The battery pack has all the advantages of the aforementioned battery box, which will not be further repeated here.

The embodiments of the present disclosure also provide a vehicle including the battery pack described above. The vehicle has all the advantages of the aforementioned battery pack, which will not be further repeated here.

## Claims

1. A battery box (100) **characterized by** comprising:
a box body, provided with a mounting cavity (140) configured to mount a plurality of battery cells (120), wherein the box body comprises a side plate (110) forming at least a part of the mounting cavity (140); and
a support assembly (130), comprising a support plate (131) and an adjustment set (150) configured to adjust a spacing between the support plate (131) and the side plate (110); wherein the support plate (131) is configured to abut against one side of the plurality of battery cells (120), to enable the plurality of battery cells (120) to abut against the box body.

2. The battery box (100) according to claim 1, **characterized in that** the adjustment set (150) is provided between the side plate (110) and the support plate (131), and the adjustment set (150) is an elastic member or a stretchable member.

3. The battery box (100) according to claim 1 or 2, **characterized in that** the support plate (131) is rotatably connected to the side plate (110) through the adjustment set (150).

4. The battery box (100) according to any one of claims 1 to 3, **characterized in that** the adjustment set (150) comprises a first connecting plate (151) and a second connecting plate (152), the second connecting plate (152) is provided at an upper end of the first connecting plate (151) and arranged oppositely to the first connecting plate (151); one side of the first connecting plate (151) and one side of the second connecting plate (152) are rotatably connected to the side plate (110), and another side of the first connecting plate (151) and another side of the second connecting plate (152) are rotatably connected to the support plate (131).

5. The battery box (100) according to claim 4, **characterized in that** the support assembly (130) further comprises a fixed plate (160) fixed to the side plate (110), and one side of the first connecting plate (151) and one side of the second connecting plate (152) are rotatably connected to the side plate (110) through the fixed plate (160).

6. The battery box (100) according to claim 5, **characterized in that** an angle between a large plane of the first connecting plate (151) and a large plane of the fixed plate (160), as well as an angle between a large plane of the second connecting plate (152) and the large plane of the fixed plate (160), are both 90°

7. The battery box (100) according to claim 5, **characterized in that** one side of the fixed plate (160) is provided with a plurality of first pivot parts (161), and the one side of the first connecting plate (151) is rotatably connected to the plurality of first pivot parts (161); another side of the fixed plate (160) is provided with a plurality of second pivot parts (162), and the one side of the second connecting plate (152) is rotatably connected to the plurality of second pivot parts (162); wherein each of the plurality of first pivot parts (161) is staggered with corresponding one of the plurality of second pivot parts (162) in a height direction of the battery box (100).

8. The battery box (100) according to claim 7, **characterized in that** a rotating rod passes through multiple holes located on one side of the first connecting plate (151) and multiple holes surrounded by multiple second pivot parts (162), to enable the first connecting plate (151) to rotate relative to the fixed plate (160) around the rotating rod.

9. The battery box (100) according to claim 8, **characterized in that** another rotating rod passes through multiple holes located on one side of the second connecting plate (152) and multiple holes surrounded by multiple first pivot parts (161), to enable the second connecting plate (152) to rotate relative to the fixed plate (160) around the rotating rod.

10. The battery box (100) according to claim 5, **characterized in that** the battery box (100) further comprises an insulating member (170) comprising a protective part (171) and a limiting part (172) connected to the protective part (171) in a bent manner; the box body further comprises a bottom plate forming at least a part of the mounting cavity (140); wherein the protective part (171) is fixed to one side of the plurality of battery cells (120), and the support plate (131) abuts against a side of the protective part (171) away from the plurality of battery cells (120); and the first **connecting** plate (151) abuts against the limiting part (172), to enable the limiting part (172) to be located between the first connecting plate (151) and the bottom plate.

11. The battery box (100) according to claim 10, **characterized in that** H2 ≤ H1
≤ H3; wherein H1 is a height of the protective part (171), H2 is a height of the support plate (131), and H3 is a height of the plurality of battery cells (120).

12. The battery box (100) according to claim 10, **characterized in that** the battery box (100) further comprises a fixed member, the fixed member passes through the first connecting plate (151) and the limiting part (172), and is fixed to the bottom plate.

13. The battery box (100) according to any one of claims 1-12, **characterized in that** D2 - 20 mm ≤ D1 ≤ D2; wherein D1 is a width of the support plate (131), and D2 is a width of the plurality of battery cells (120).

14. A battery pack, comprising a plurality of battery boxs (100) according to any one of claims 1-13.

15. A vehicle, comprising the battery pack according to claim 14.
